# FASCICULE DE BREVET EUROPEEN

(11) **EP 2 550 162 B1**
(45) Date de publication et mention de la délivrance du brevet: **17.02.2016**
(21) Numéro de dépôt: 10796005.6
(22) Date de dépôt: 13.12.2010
(51) Int. Cl.: B41C 1/05, B41M 1/04

(54) **NOUVEAU PROCÉDÉ POUR LA CONCEPTION DE CLICHÉS UTILISABLES EN FLEXOGRAPHIE**
NEUES VERFAHREN ZUM ENTWURF VON BEIM FLEXODRUCK NÜTZLICHEN PLATTEN
NOVEL METHOD FOR DESIGNING PLATES USABLE IN FLEXOGRAPHY

(30) Priorité: 15.12.2009 FR 0906069
(43) Date de publication de la demande: 30.01.2013
(73) Titulaire: Profil Press, 87410 Le Palais-sur-Vienne (FR); Baudry, Raphaël, 87920 Condat sur Vienne (FR)
(72) Inventeur: BAUDRY, Raphaël, F-87920 Condat sur Vienne (FR); LEGER, Jérémy, F-87920 Condat sur Vienne (FR)
(74) Mandataire: Barny, Luc
(86) Numéro de dépôt international: PCT/EP2010/069500
(87) Numéro de publication internationale: WO 2011/073136

(56) Documents cités:
- EP-A2- 1 873 586
- WO-A1-2010/006863
- WO-A1-2010/046271

## Description

La présente invention concerne le.domaine de l'impression et, plus particulièrement, de la photogravure. De manière plus spécifique, l'invention objet de la présente demande de brevet vise un procédé pour la réalisation de clichés pour impression en photogravure et plus particulièrement en flexogravure ou flexographie.

Les procédés d'impression par flexographie sur rotative utilisent des formes imprimantes élastiques et en relief faisant office de tampon, appelées clichés.

Ces formes sont composées d'une couche élastomérique et d'une couche support stable dimensionnellement (c'est-à-dire suffisamment rigide pour ne pas s'étendre et se déformer de façon durable afin de conserver une couche support plane et suffisamment flexible pour permettre les manipulations, par exemple le stockage sous forme de rouleaux, sans provoquer d'altération de la couche).

La couche élastomérique peut être en caoutchouc, mais la technologie dominante est aujourd'hui l'utilisation de photopolymères liquides ou solides.

Le procédé d'impression en lui-même est relativement simple. Un système d'encrage transfère l'encre sur un rouleau encreur, appelé anilox, une quantité déterminée d'encre. L'anilox vient déposer ensuite cette quantité précise d'encre sur les reliefs du cliché. Ce cliché, préalablement fixé sur le support d'impression par un adhésif, vient ensuite transférer l'encre sur le support à imprimer.

Cette opération est répétée pour chaque groupe imprimant, nécessitant donc un jeu de plusieurs clichés correspondant chacun à un groupe imprimant.

Par « groupe imprimant », il faut comprendre l'ensemble des éléments constituant un groupe imprimant : cylindre porte cliché; cylindre anilox; cylindre de contre-pression.

Par exemple, dans le cadre d'une image en couleur, il est classiquement utilisé des presses fonctionnant en quadrichromie, c'est-à-dire comprenant quatre groupes imprimant, à savoir un groupe cyan, un groupe magenta, un groupe jaune et un groupe noir.

Les couleurs sont le résultat des applications successives de chacune des encres de ces quatre groupes. Le support à imprimer va donc passer au niveau de chaque anilox de chaque groupe imprimant où, pour chacun des groupes, un cliché viendra déposer par pression une quantité d'encre déterminée. L'image en couleur résultera de la superposition de chacune de ces quatre encres.

Le transfert d'encre se fait au moment de l'impression par pression entre le cliché et le support. Cette pression entraîne un écrasement du cliché qui aura pour conséquence une augmentation de la surface du relief en contact avec le support, ce qui entraîne un phénomène dit d'engraissement de cette impression.

Ces clichés peuvent être réalisés, par exemple, grâce à un procédé photomécanique. Le modèle ou dessin à imprimer est réalisé, par exemple à l'aide de moyens informatiques, puis on en tire un négatif photographique. Lors d'une étape préalable, une plaque photopolymère flexographique est irradiée avec des ultraviolets UV par le dessous afin de constituer une couche de base ou semelle de consolidation entre la couche support et la résine de la couche photopolymère. Cette semelle est nécessaire pour une impression de qualité. Le négatif est ensuite placé sur la plaque, puis exposé au rayonnement UV, le film négatif joue alors le rôle d'un masque en laissant passer la lumière UV uniquement au travers des zones à imprimer et en laissant non-réticulées les zones cachées. Après l'exposition, les parties non-réticulées sont éliminées par lavage et brossage avec des solvants appropriés, les parties réticulées restent alors en relief et forment ainsi le cliché imprimable. Il est à préciser ici que cette technique de réalisation d'un cliché, si elle est la plus répandue aujourd'hui, n'est aucunement limitative et que toute autre technique ou évolution évidente pour l'homme de l'art doit être considérée comme comprise dans cette invention.

Le cliché, ainsi obtenu est ensuite monté sur un support d'impression, suivant les applications soit sur un cylindre d'impression, soit sur un manchon ou bien encore sur un tapis ou bande d'impression.

Plusieurs types de presses existent à ce jour, chacune ayant des propriétés propres comme (Mark Andy ™, MPS, COMEXI™ , FLEXOTECHNICA™, etc.). A titre d'exemple, il peut être cité ici les presses dites « à groupes en lignes » ou les presses dites « à tambour central ». Ces différentes propriétés influent sur le rendu du produit final.

En outre, il existe également différentes familles d'encres utilisables comme, par exemple, les encres à l'eau, les encres à solvant ou encore les encres à UV. Chaque encre a ses propres caractéristiques et peut présenter, entre autres, un taux de transfert sur le support qui lui est propre. De plus, en fonction du fabricant, la pigmentation peut varier, ce qui pourra influencer la densité et la colorimétrie du résultat imprimé.

De plus, chaque presse comporte un système d'encrage par groupe imprimant qui est différent. Comme vu plus haut, le système d'encrage comporte un organe important ; l'anilox. Le rôle de l'anilox est de déposer sur le cliché un volume d'encre contrôlé afin d'imprimer un résultat régulier au cours du tirage. Les anilox, en fonction de leur spécificité, peuvent déposer des volumes d'encre très différents. A titre d'exemple, certains imprimeurs utilisent des anilox à faible dépôt, aux alentours de 2 cm3/m2, alors que d'autres préfèrent des anilox avec un dépôt plus important, aux alentours de 4cm3/m2.

Enfin, il existe également une grande variété de matériaux pour la réalisation même du cliché qui pourra présenter, alors, une dureté différente. Le cliché peut présenter une dureté allant du simple au triple comme, par exemple, de 28 shore (Mac Dermid™ 4.32 MGC) à 78 shore (FLINT 1.14 ACE™). Un cliché tendre aura, sous l'effet de la pression lors de l'impression, une augmentation de la surface de contact plus importante qu'un cliché plus dur, ce qui se traduira par un engraissement plus important. De plus, les clichés peuvent avoir des épaisseurs variées, pouvant aller d'environ 0,76 mm à environ 6 mm, ce qui peut également impacter le résultat final imprimé.

Ces différents paramètres ne doivent pas être considérés comme exhaustifs mais plutôt être considérés dans leur ensemble afin de mettre en avant les difficultés que peut rencontrer un imprimeur lors de l'étape finale d'impression. D'autres paramètres pourront être pris en considération comme, par exemple, l'adhésif de montage du cliché.

De plus, l'imprimeur doit également adapter les réglages des presses en fonction de la nature même du support d'impression.

Classiquement, l'impression par photogravure, et tout particulièrement par flexographie, peut être utilisée sur des supports présentant des caractéristiques très éloignées comme, à titre illustratif, le papier, le carton compact, le carton ondulé, la feuille d'aluminium, le film plastique, etc.

En pratique, un imprimeur va passer plusieurs heures à régler ses presses pour, dans la plupart des cas, ne pas obtenir le résultat escompté mais simplement un compromis approchant du BAT.

Pour ce faire, l'imprimeur devra réaliser plusieurs tirages, consommateurs en matière première comme l'encre ou le support même, ce qui aura pour conséquence une augmentation des coûts.

Il peut être mentionné la demande de brevet EP1873586 qui aborde un problème technique proche de celui objet de la présente demande de brevet. EP1873586 décrit un procédé de production de formulaires d'impression optimisés reposant sur la gestion du profil colorimétrique et, plus particulièrement, en déterminant une valeur cible qui sera utilisée pour pallier la dérive des encres.

Si ce procédé, complexe à mettre en oeuvre, apporte un avantage certain, il ne décrit ni ne suggère le procédé objet de la présente demande de brevet qui vise, quant à lui, la confection de clichés en prenant en compte l'ensemble des paramètres de chaque imprimeur à des étapes antérieures à la gestion colorimétrique.

Il n'existe pas à l'heure actuelle de test permettant de reproduire sur échantillons en laboratoire, ou par informatique, les conditions industrielles exactes d'impression en photogravure ou flexographie et de prévoir le comportement des papiers ou supports lors de leur impression sur rotative.

L'imprimeur est donc obligé de faire tous ses réglages, pour partie empiriquement, et en particulier de choisir les trames du rouleau doseur d'encre et du cliché flexographie, directement sur rotative, ce qui implique, soit des résultats d'impression qui ne sont pas toujours optimaux et donc une qualité d'impression perfectible, soit de nombreux réglages sur machine, et donc un coût d'impression beaucoup plus élevé.

A ce jour, si le procédé même d'impression en flexographie est bien défini et donne satisfaction à ses utilisateurs, il n'en reste pas moins vrai qu'il reste donc assez long, consommateur en matières premières, en temps et est «laborieux» à mettre en oeuvre.

Comme explicité plus haut, de par le nombre de paramètres à intégrer par l'imprimeur pour pouvoir espérer obtenir un résultat imprimé correspondant à la demande, ou Bon à Tirer (BAT), du client, il lui est nécessaire de passer beaucoup de temps en réglages et ce, sans avoir l'assurance d'obtenir un résultat satisfaisant.

La présente invention vise à pallier ce manque en proposant un nouveau procédé de confection de clichés prenant en compte l'ensemble des paramètres de réglages et propre à chaque presse de manière à ce que l'imprimeur n'ait plus à passer beaucoup de temps en réglage de sa presse. Comme vu plus haut, un des aspects innovants de l'invention repose sur le fait qu'il propose de prendre en compte l'ensemble des paramètres en amont de la gestion du profil colorimétrique, rendant ainsi ladite gestion du profil colorimétrique beaucoup plus rapide et facile à mettre en oeuvre.

Pour ce faire, le procédé objet de l'invention intègre, dès la conception même du cliché, l'ensemble des paramètres propres à une presse donnée.

Selon une forme de réalisation, il peut être considéré que l'élaboration d'un profil colorimétrique en impression flexographique selon l'invention comprend trois points fondamentaux, à savoir i) la linéarisation des plaques polymères, ii) la gestion des engraissements machine et iii) la gestion du profil colorimétrque.

L'un des aspects innovants de l'invention, comme vu plus haut, repose sur le fait qu'elle prend en compte dès le début les aspects i) de linéarisation et ii) des engraissements alors que l'art antérieur se focalise sur l'aspect iii) de gestion du profil colorimétrique.
Dans la pratique, une mauvaise gestion des deux premiers aspects compromettra le résultat imprimé qui ne pourra pas correspondre à l'identique au Bon à tirer (BAT).

Plus particulièrement, une des innovations du procédé objet de la présente invention est de définir, contrairement à l'ensemble des techniques utilisées aujourd'hui, une DGC (d'après la nomenclature anglaise « Dot Gain Compensation ») par groupe imprimant et non pour l'ensemble de ces groupes.

Le cliché imprimable, correspondant à l'image à imprimer en relief, se présente le plus souvent sous la forme d'un ensemble de points appelé trame.

Plus particulièrement, la trame se présente comme une matrice de points de très petite dimension, d'espacement constant et de taille variable, ces points n'étant pas discernables à l'oeil nu.

C'est la variation de la taille des points de trame, couleur par couleur, qui va recomposer les différentes nuances de l'image.

Une trame est définie par trois paramètres : sa linéature, son orientation pour chacune des quatre couleurs et la forme de ses points. La linéature correspond à la finesse de la trame.

L'orientation détermine les angles que doivent former les différentes trames les unes avec les autres, pour éviter les interférences que les imprimeurs nomment moirage.

En outre, la forme du point a aussi son importance. Pour un tirage en niveaux de gris (donc avec un seul passage d'encre), il est recommandé de choisir un point rond, qui garantit une meilleure distribution de l'encre. Il est cependant impossible de reproduire un point sans l'agrandir. Cet élargissement du point de trame a une origine optique et une origine mécanique. En effet, un point de trame va absorber à la fois de la lumière incidente et de la lumière réfléchie. Optiquement, il apparaîtra donc toujours plus gros qu'il n'est réellement. Mécaniquement le transfert d'encre par pression va étaler l'encre, notamment si le support à imprimer est absorbant. Il y a un élargissement mécanique du point de trame.

L'élargissement du point de trame peut être minimisé par le choix des consommables adéquats et des réglages appropriés (choix de l'encre, de sa viscosité, de son niveau d'émulsion, réglage de la pression planche papier etc...). Cette démarche est empirique et souvent peu rentable dans la mesure où les choix sont effectués essentiellement en fonction d'impératifs techniques. Il faut aussi considérer les limites de cette démarche qui n'est pas nécessairement reproductible dans le mesure où elle dépend d'un certain nombre de compromis effectués par le conducteur de presse au moment de l'impression.

L'élargissement du point de trame peut aussi être anticipé et compensé au moment de la conception du cliché, il s'agit alors de la démarche de DGC évoquée plus haut. La détermination de valeurs de dégraissement pertinentes est source de difficultés techniques et comme nous allons le voir dans l'exemple illustrant l'invention, la solution jusque là connue de l'homme du métier n'était pas complètement pertinente.

Ce qui est décrit pour un point vaut quelle que soit la forme de ce point qui ne doit pas nécessairement être considéré comme rond. Même si les usages utilisent le terme de DGC faisant référence à un point, le problème technique lié à l'élargissement et à sa compensation par anticipation, groupe imprimant par groupe imprimant, est le même quand l'image qui doit être reproduite n'est pas tramée. Ainsi un trait va lui aussi s'élargir à l'impression et nécessitera d'être compensé par ajustement du cliché. Cette compensation sera d'autant plus pertinente qu'elle sera effectuée, selon l'invention, groupe imprimant par groupe imprimant.

Pour une image tramée, les valeurs de trame varient selon la surface des points de trame pour chaque couleur (la couche d'encre restant égale en épaisseur et en densité). A titre d'exemple, une valeur de trame 40 % signifie que 40 % de la surface est recouverte par l'encre sous forme de points et 60 % du papier blanc est visible. La valeur maximale est 100 % il s'agit alors d'une couleur en aplat.

Classiquement, la tâche du photograveur est d'appliquer une courbe de dégraissement à ces valeurs de trame pour compenser l'engraissement lié au passage machine. Les valeurs tirées de cette courbe sont appelées DGC, ou courbe de dégraissement d'après la nomenclature anglaise « Dot Gain Compensation ».

En pratique, les photograveurs appliquent une DGC moyenne, quelque soit l'imprimeur et, donc, quelque soit la presse utilisée et ses caractéristiques propres, comme expliqué plus haut. La même DGC est appliquée pour chaque cliché, ce indépendamment du groupe imprimant auquel il est dédié.

La présente invention se distingue de l'art antérieur en proposant, pour la première fois, de déterminer et d'appliquer une DGC par groupe imprimant et pour chaque type de support, ce qui implique de réaliser une courbe de dégraissement par groupe imprimant. Cette démarche aura pour résultat de permettre la réalisation des clichés dont les engraissements seront parfaitement maîtrisés. En pratique, chaque valeur de trame pour chaque groupe imprimant ne sera pas dégraissée avec une valeur de DGC moyenne aléatoire, mais chacune le sera avec une valeur de DGC qui lui est propre.

La présente invention a donc pour objet, dans une première phase d'application, un procédé pour la confection d'un jeu de clichés directement utilisables sur une presse flexographie intégrant des valeurs de trame ajustées de manière à imprimer une épreuve correspondant à l'identique au Bon à Tirer (BAT), ledit procédé comprenant les étapes suivantes :
a) Réaliser un jeu de clichés linéarisés afin de déterminer les valeurs d'engraissement de la presse flexographie sur chaque groupe imprimant et ce sur chaque support utilisé.
b) Effectuer une impression avec chacun des clichés obtenus à l'étape a).
c) Déterminer, pour chaque groupe imprimant, la densité d'encre qui devient alors la densité standard de la presse sur chaque support.
d) Déterminer, pour chaque type de support utilisable avec ladite presse donnée, une DGC par groupe imprimant, en tenant compte de la densité d'encre standard.
e) Confectionner un jeu de clichés dont chaque cliché est dégraissé selon les DGC obtenues à l'étape d) de manière à ce que chaque cliché présente, pour chaque groupe imprimant, des valeurs de trame ajustées et dédiées au support référencé aux étapes c).

Par jeu de clichés, il faut comprendre l'ensemble des clichés nécessaire pour imprimer une image, c'est à dire un cliché par groupe imprimant. Par exemple, pour une impression en quadrichromie, le jeu de clichés comprendra quatre clichés.

Par cliché linéarisé, il faut comprendre un cliché dont les valeurs de trame ciblées à l'impression sont identiques aux valeurs de trame sur le cliché. Par exemple, une valeur de trame ciblée à 20% aura une valeur de trame à 20% sur le cliché.

La linéarisation consiste donc à corriger les dérives des valeurs de trame en fonction a) de la sensibilité de la matière polymère et b) de la fréquence de trame de manière à éliminer, ou à tout le moins diminuer, la perte de gravure (correspondant à la différence entre la valeur ciblée et la valeur réellement obtenue).

Comme vu plus haut, il existe une grande variété de supports utilisables présentant, chacun, des particularités propres appelant un réglage adapté de la presse. Il sera aisément compris qu'une feuille de carton ondulée et une feuille de film plastique présentent, entre autre, une épaisseur différente demandant un réglage donné. En outre, chaque matière polymère a sa propre sensibilité lors de l'insolation et de la gravure, en fonction de sa formulation.

La gestion des engraissements consiste à nouveau à corriger les dérives des valeurs de trame en fonction des conditions d'impression comme, à titre d'exemple :
a) le support (papier couché, polypropilène transparent, polyéthylène blanc, aluminium, etc.) ;
b) le système d'encrage (volume d'encre, ANILOX, etc.) ; et
c) la pigmentation des encres (les valeurs Lab des encres utilisées, etc.).

En fonction du support utilisé, il y aura un GAMUT différent (blancheur du support) et un taux de transfert d'encre relatif à la tension de surface du support. En fonction de ces paramètres, le taux d'engraissement sera à maîtriser selon chaque support. En outre, comme cela ressortira des exemples illustrant spécifiquement l'invention, il est à noter que le taux d'engraissement est effectivement significativement différent sur chaque groupe imprimant dans la gamme CMYK.

En pratique, la densité d'encre standard est déterminée avec l'imprimeur en fonction de la presse utilisée, la nature des encres utilisées, les volumes d'encre transférée selon les trames anilox.

Classiquement, cette densité d'encre standard est comprise entre 0,70 et 2,80.

Cet aspect de l'invention est particulièrement avantageux en ce sens que, contrairement aux procédés de l'art antérieur, la densité d'encre utilisée est définie par l'imprimeur en fonction de la presse et non l'inverse. En effet, pour les procédés classiques utilisés à ce jour, la densité d'encre à utiliser était définie par le flexograveur ou photograveur en fonction du BAT ( Bon à Tirer, ou épreuve); l'imprimeur devant alors adapter sa presse à cette densité (ce qui est difficile compte tenu, comme vu plus haut, du grand nombre de presses existantes). L'un des avantages indéniable de l'invention est de résoudre le problème en inversant la démarche, c'est-à-dire que le cliché et le BAT seront réalisés en tenant compte de la densité d'encre définie préalablement avec l'imprimeur, ce dernier n'ayant alors plus besoin de régler sa presse. Cette densité sera appelée par la suite densité d'encre standard.

L'invention a également pour objet, selon une autre forme de réalisation, l'utilisation du procédé tel que décrit plus haut pour l'impression d'épreuves correspondant au Bon à Tirer d'un client.

Selon une autre forme d'application de l'invention, cette dernière ne se limite pas à la détermination d'une DGC par groupe imprimant, mais vise un procédé global d'impression.

Plus particulièrement, selon une forme d'exécution préférée de l'invention, il est décrit un procédé d'impression sur une presse flexographie intégrant des valeurs de trame ajustées de manière à imprimer une épreuve correspondant à l'identique au Bon à tirer du client, ledit procédé comprenant les étapes suivantes :
i) Confectionner un jeu de clichés par mise en oeuvre du procédé tel que décrit plus haut ;
ii) Effectuer une impression avec lesdits clichés obtenu à l'étape i) sur chacun des supports utilisés ;
iii) Déterminer le profil colorimétrique de ladite presse sur chacun des supports utilisés à partir des résultats d'impression de l'étape ii) ;
iv) A partir du profil colorimétrique obtenu à l'étape iii), simuler à l'identique à l'écran, l'impression de la presse flexographie selon l'ensemble des paramètres de ladite presse flexographie et selon les différents supports ;
v) Réaliser un BAT simulant parfaitement l'impression qui sera obtenue sur la presse flexographie.

Cet aspect de l'invention est particulièrement innovant en ce sens qu'aucun graveur, à ce jour, ne passe par une étape de détermination d'un profil colorimétrique et donc, a fortiori, par la détermination d'un profil colorimétrique à partir de clichés obtenu selon l'invention.

A ce jour, classiquement, la majorité des presses utilisées en flexographie présentent quatre groupes imprimant, à savoir Cyan, Magenta, Jaune et Noir (appelé système CMJN). Si le procédé objet de la présente invention est particulièrement adapté à ce système en quadrichromie CMJN, il faut comprendre qu'il peut également être appliqué à tout autre système et n'est en aucune manière limité à un système en quadrichromie.

Dans une forme de réalisation préférée, mais non limitative, le procédé selon l'invention est caractérisé en ce que le profil colorimétrique déterminé à l'étape iii) est déterminé en quadrichromie.

La gestion de la colorimétrie permet d'anticiper les dérives des encres et permet alors de proposer une cible (BAT) qui sera relative à ce qui sera imprimé. La densité optique relevée diffère selon le fabricant, la pigmentation et le support utilisé. En pratique, il peut être mesuré selon le support sur une même machine, une encre à 1,43 et à 1,75. Cette différence de tonalité éloignera d'autant plus le résultat de la cible. De même, les valeurs Lab sont relatives à la pigmentation des encres et, selon le fabricant, il peut être mesuré des écarts importants sur ces valeurs. Un BAT qui ne tiendra pas compte de cet écart ne sera pas en relation avec le résultat imprimé.

La présente invention permet de corriger ces dérives en amont de la chaîne de fabrication et permet ainsi d'obtenir effectivement les valeurs ciblées.

L'un des avantages du procédé selon l'invention est qu'il peut être adapté à tout type de support. De manière préférée, lesdits supports sont choisis parmi le groupe consistant en du papier, du carton plat, du carton compact, du carton ondulé, une feuille d'aluminium, un film plastique, un film biodégradable.

Outre les avantages techniques et économiques de la présente invention, il convient également de mettre en avant les avantages écologiques de la présente invention. En effet, tout imprimeur qui utilisera le procédé objet de l'invention utilisera beaucoup moins de matériau pour pouvoir espérer régler correctement ses paramètres d'impression. Dans le cadre d'une politique de développement durable, la présente invention consiste en un progrès considérable puisqu'elle permet de diminuer les gâchis de matériau liés au réglage.

L'invention sera mieux comprise à la lecture des exemples ci-dessous en relation avec les figures suivantes :

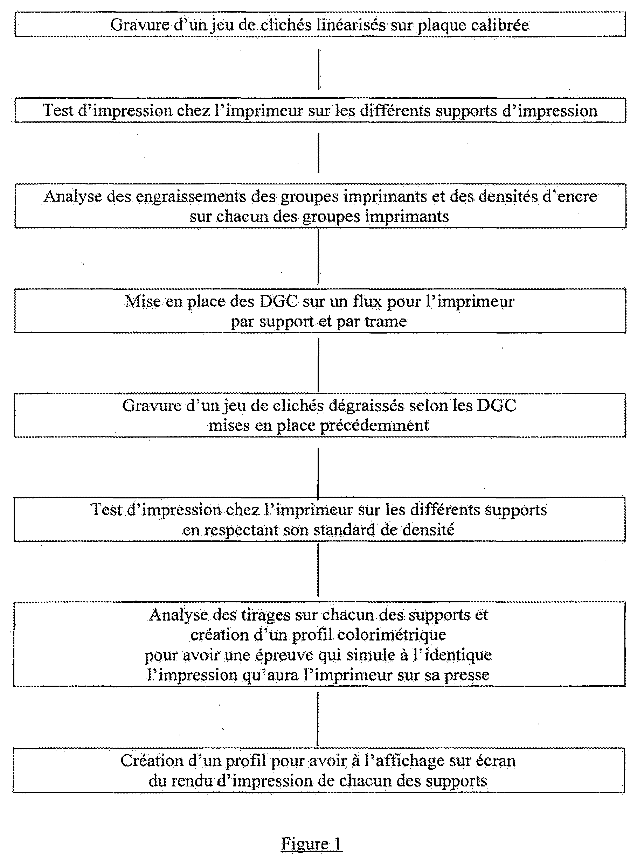

Figure 1 : Digramme décisionnel représentant un mode d'exécution de l'invention.
Figure 2 : Courbes DGC, ou courbe de dégraissement pour chacun des 4 groupes imprimant (CMJN) pour le support MC-PRIMECOAT™.
Figure 3 : Courbes DGC pour chacun des 4 groupes imprimant (CMJN) pour le support PP TOP TRANS™.
Figure 4 : Courbes DGC pour chacun des 4 groupes imprimant (CMJN) pour le support HGW Couché Chrome™.
Figure 5 : Courbes DGC pour chacun des 4 groupes imprimant (CMJN) pour le support PP WHITE™.
Figure 6 : Courbe de linéarisation (151 lpi) sur la matière première RAVE 1.14mm avec les valeurs d'entrée sur l'axe des x et les valeurs de sortie sur l'axe des y.
Figure 7 : Courbe DGC pour chacun des 4 groupes imprimant (CMJN) pour un support papier couché avec une encre UV.
Figure 8 : Courbe DGC pour chacun des 4 groupes imprimant (CMJN) pour un support polypropylène avec une encre solvant.

Les exemples ci-dessous illustrent l'invention par mise en oeuvre du procédé tel que décrit plus haut dans le cadre de différents supports présentant des caractéristiques très éloignées.

Pour l'ensemble des exemples ci-dessous, la presse flexographie est la même, à savoir une presse MARK ANDY 2200™. Bien évidemment, ce type de presse flexographie n'est aucunement limitatif mais ne fait qu'illustrer un exemple de mise en oeuvre du procédé objet de la présente invention.L'encre utilisée est une encre SIGMA II-FLINT™ et l'adhésif utilisé pour la fixation des clichés est l'adhésif SCAPA™ souple 43100-0,38. La vitesse de tirage est également la même, à savoir 75m/min.

Il convient de noter ici que l'ensemble de ces caractéristiques est défini par l'imprimeur qui impose ainsi ses caractéristiques à la conception des clichés, et non l'inverse. Quatre types de support ont été testés. Pour chacun des supports, les caractéristiques suivantes ont été fixées par l'imprimeur pour chacun des 4 groupes imprimant du système quadrichromie.
- *Support : MC-PRIMECOAT™*
   Groupe CYAN (Cyan): anilox 800-1 Service 3,6cm3/m2 avec une densité d'encre (D) de 1,67.
   Groupe MAGENTA (Magenta): anilox 800-2 BAT 4,5cm3/m2 avec une densité d'encre (D) de 1,64.
   Groupe JAUNE (Yellow): anilox 800-3 BAT 4,5cm3/m2 avec une densité d'encre (D) de 1,09.
   Groupe NOIR (Black) : anilox 600-2 BAT 5,2cm3/m2 avec une densité d'encre (D) de 1,72.
- *Support : PP TOP TRANS™*
   Groupe CYAN (Cyan) : anilox 800-1 Service 3,6cm3/m2 avec une densité d'encre (D) de 1,12.
   Groupe MAGENTA (Magenta) : anilox 800-2 BAT 4,5cm3/m2 avec une densité d'encre (D) de 1,36.
   Groupe JAUNE (Yellow): anilox 800-3 BAT 4,5cm3/m2 avec une densité d'encre (D) de 0,94.
   Groupe NOIR (Black) : anilox 600-2 BAT 5,2cm3/m2 avec une densité d'encre (D) de 1,45.
- *Support : HGW Couché chrome™*
   Groupe CYAN (Cyan) : anilox 800-1 Service 3,6cm3/m2 avec une densité d'encre (D) de 1,77.
   Groupe MAGENTA (Magenta) : anilox 800-2 BAT 4,5cm3/m2 avec une densité d'encre (D) de 1,81.
   Groupe JAUNE (Yellow): anilox 800-3 BAT 4,5cm3/m2 avec une densité d'encre (D) de 1,10.
   Groupe NOIR (Black) : Anilox 600-2 BAT 5,2cm3/m2 avec une densité d'encre (D) de 1,81.
- *Support : PP WHITE™*
   Groupe CYAN (Cyan) : anilox 800-1 Service 3,6cm3/m2 avec une densité d'encre (D) de 1,48.
   Groupe MAGENTA (Magenta) : anilox 800-2 BAT 4,5cm3/m2 avec une densité d'encre (D) de 1,57.
   Groupe JAUNE (Y) de 1,10.
   Groupe NOIR (Black) : anilox 600-2 BAT 5,2cm3/m2 avec une densité d'encre (D) de 1,68.

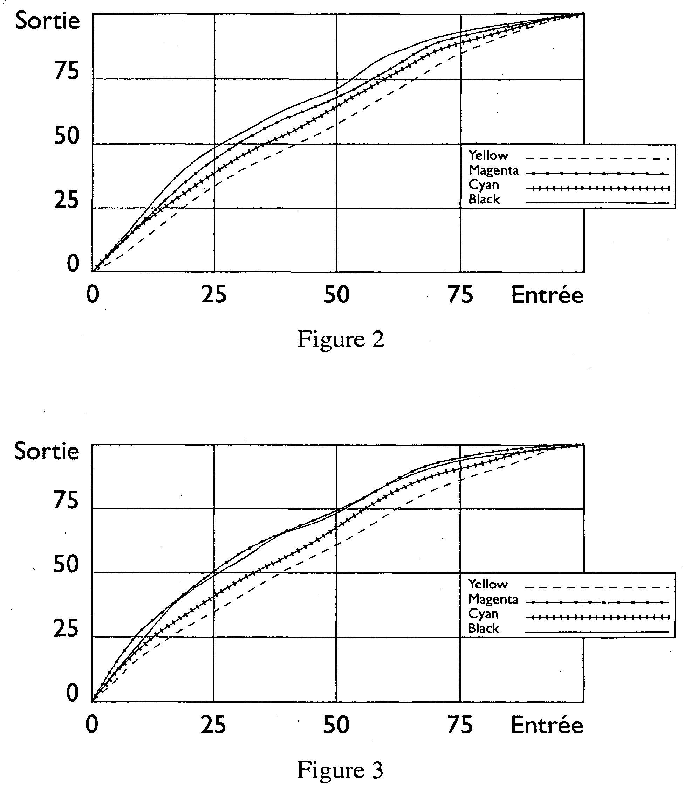

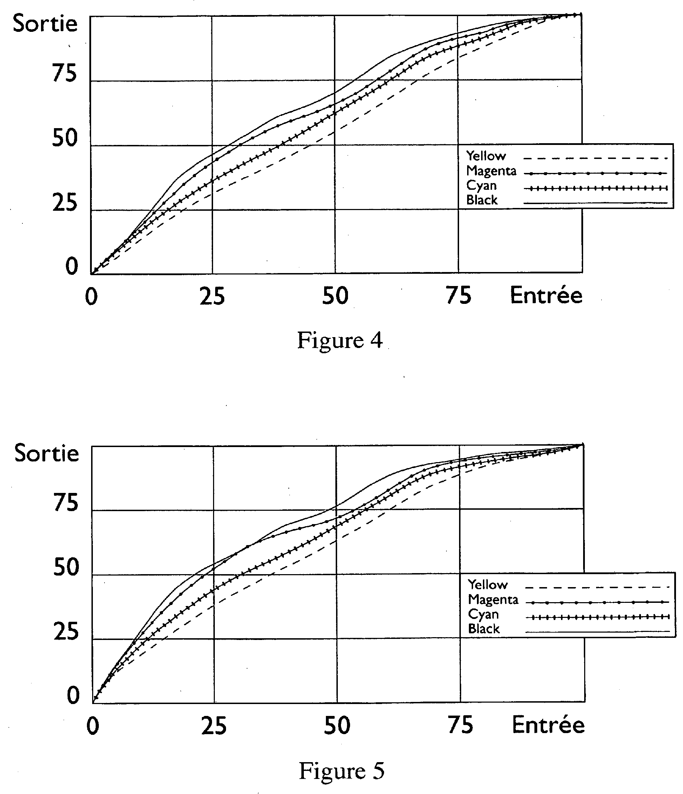

Pour chacun des quatre supports, le procédé objet de l'invention est mis en oeuvre pour déterminer, pour chacun des quatre groupes imprimant, une courbe de dégraissement. Les courbes de dégraissement sont représentées aux figures 2 à 5 avec, respectivement, la figure 2 représentant les courbes appliquées au support MC-PRIMECOAT™, la figure 3 correspondant au support PP TOP TRANS™, la figure 4 correspondant au support HGW Couché chrome™ et la figure 5 correspondant au support PP WHITE™. En « entrée » figurent les pourcentages afférents aux clichés et en « sortie » ceux relatifs aux résultats imprimés rendus. Les pourcentages exprimés sont des pourcentages de couverture, c'est-à-dire la proportion de la surface totale recouverte par les points de trame.

Sur la base de ces courbes, la DGC applicable à chaque groupe imprimant peut alors être déterminée suivant l'invention.

Les corrections pour la réalisation des différents clichés sont regroupées dans le tableau 1 ci-dessous.

**Tableau 1**

| **SUPPORT** | **DGC** (%) **CYAN** | **MAGENTA** | **JAUNE** | **NOIR** |
|---|---|---|---|---|
| **MC-PRIMECOAT™** | 65,3 | 68,3 | 57,5 | 72,1 |
| **PP TOP TRANS** | 66,4 | 72,2 | 59,6 | 71,1 |
| **HGW™** | | | | |
| **Couché Chrome™** | 63,1 | 65, 9 | 55,9 | 70,3 |
| **PP White™** | 69, 0 | 71,9 | 63,1 | 76,1 |

Il ressort donc clairement des résultats obtenus et regroupés dans le tableau 1 que, pour pouvoir espérer obtenir une impression correspondant à la commande du client, il n'est pas possible d'appliquer une DGC moyenne à l'ensemble des groupes imprimants.

Chaque groupe imprimant devra se voir appliquer un dégraissement propre pouvant varier grandement d'un groupe à l'autre pour un même support comme, par exemple pour le support MC PRIMECOAT™, il est mesuré 57,5% pour le groupe JAUNE alors que pour le groupe NOIR, il est mesuré 72,1%, sur une valeur cliché à 50%.

La détermination des profils colorimétriques pourra alors être réalisée par toute technique connue de l'homme de l'art et, plus particulièrement, comme décrit plus haut dans le cadre de la présente description.

Plus particulièrement, le jeu de cliché est réalisé en tenant compte des paramètres d'engraissement de la presse et du support.

Le résultat imprimé reprend plusieurs centaines de couleurs du spectre colorimétrique, l'analyse, de cette gamme de couleur, par l'emploi combiné d'un spectromètre (ex. : Gretatag™) et d'un système de gestion des profils colorimétriques (ex. : Profil Maker™) permet de créer et d'éditer le profil colorimétrique spécifique d'une presse et d'un support donnés. Ce profil peut alors être exploité par les différents logiciels de traitement d'image (ex. : Photoshop™, ArtColor™ ...) afin de simuler en affichage le rendu colorimétrique d'une image selon le résultat qui sera obtenu sur la presse et le support ciblés.

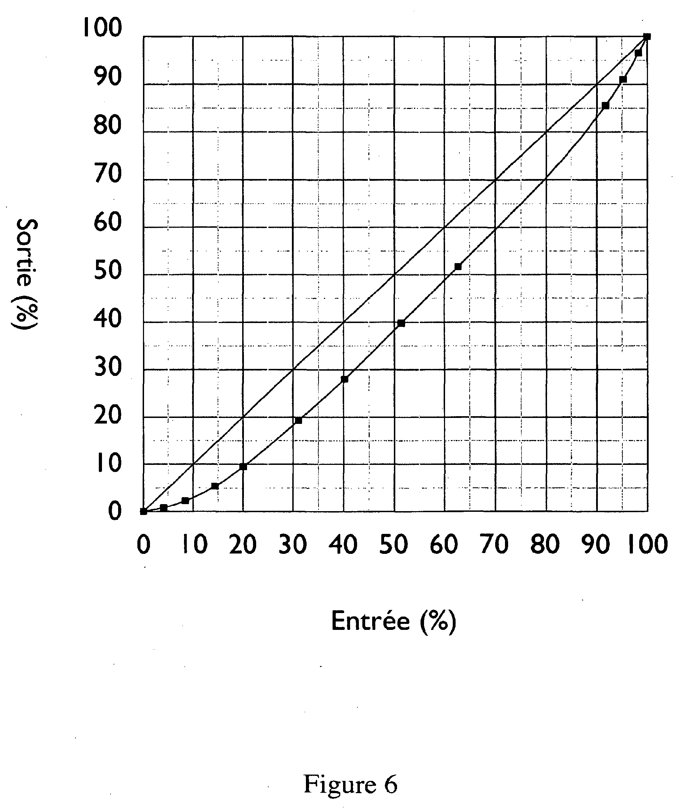

La figure 6 correspond à une courbe de linéarisation (1511pi) avec en entrée les valeurs cibles du fichier informatique et, en sortie, les valeurs mesurées sur le cliché gravé. A titre d'exemple, la valeur de 40% en entrée est croisée avec une valeur mesurée en sortie de 28,75%. Le tableau 2 ci-dessous reprend les correspondances des valeurs d'entrée par rapport aux valeurs de sortie.

**Tableau 2**

| Entrée | Sortie |
|---|---|
| 0.00 | 0.00 |
| 4.50 | 0.25 |
| 9.00 | 2.50 |
| 14.37 | 6.25 |
| 19.69 | 10.31 |
| 30.63 | 19.69 |
| 40.00 | 28.75 |
| 50.99 | 40.31 |
| 62.19 | 52.19 |
| 90.62 | 85.94 |
| 95.00 | 91.00 |
| 98.44 | 96.88 |
| 100.00 | 100.00 |

L'étape de linéaristion permet de pallier cette dérive et ainsi d'obtenir le résultat escompté.

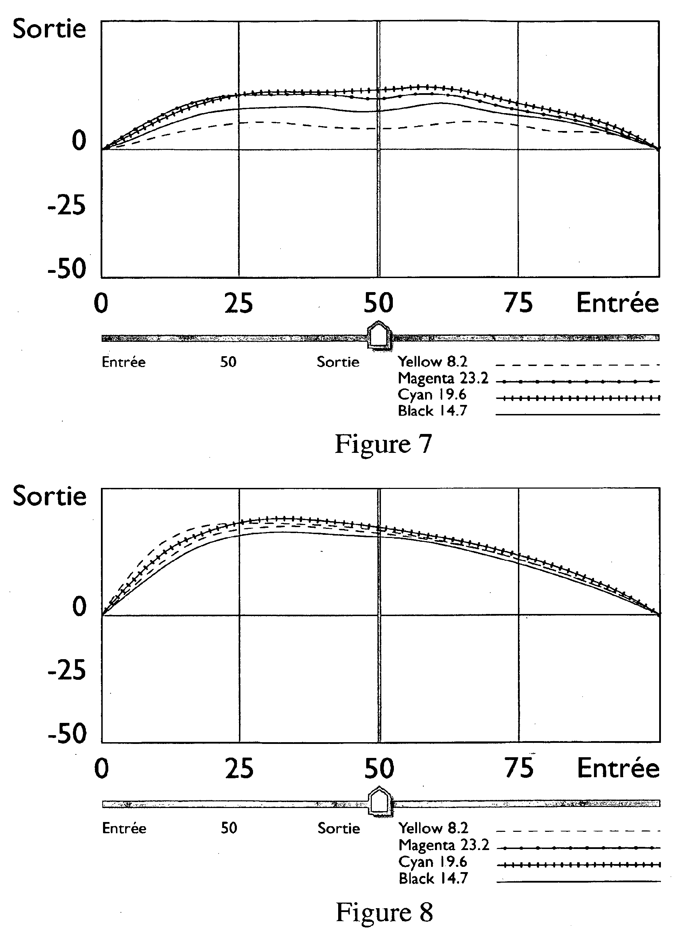

La figure 7 illustre les différences d'engraissements sur un support de type papier couché avec impression à encre UV.

Il est mesuré un taux d'engraissement relativement faible, sur une valeur cible à 50%, mais avec des écarts importants qu'il est impossible à négliger pour l'obtention d'un résultat satisfaisant.

Plus particulièrement, il ressort de cette figure que le magenta est mesuré avec un gain de 23,2% (en valeur absolue) alors que le yellow (jaune) est mesuré avec un gain de 8,2%.

Le Magenta est donc mesuré à 73,2% (50% de la valeur cible + 23,2% de gain) et le Yellow (jaune) à 58,2% (50% de la valeur cible + 8,2% de gain), ce qui fait un écart important de 15%.

Il est donc évident qu'en absence de gestion des engraissements pour chaque groupe imprimant, il y aura ici une dérive importante sur la gamme violette (cyan + magenta) qui devra être corrigée par l'imprimeur en modifiant soit les volumes d'ANILOX, soit en diluant les encres dominantes. L'invention permet de pallier de manière simple et fiable, sans recourir aux interventions « aléatoires » de l'imprimeur, à cette dérive.

La Figure 8 illustre un exemple avec de faibles différences d'engraissement pour un autre support, à savoir un support de type polypropylène) avec des encres à solvant. Dans cet exemple, les taux d'engraissements sont élevés, de l'ordre de 30% en valeur absolue avec un faible écart de gain de 2% (mesure de 34,2% pour le Magenta et 32,4% pour le Yellow). Les écarts d'engraissement se situent ici sur le quart de ton (valeurs entre 15% et 30%). Il est indispensable que les engraissements soient spécifiquement corrigés pour chaque imprimante, pour chaque support et pour chaque groupe imprimant. Toute dérive non corrigée provoquera une couleur dominante à l'impression. Il convient alors d'utiliser une gamme linéarisée imprimée, c'est-à-dire dont les valeurs cibles sont équivalentes aux valeurs mesurées, pour pouvoir mesurer l'engraissement réel en machine selon les conditions d'impression.

Dans le cadre du présent exemple, les valeurs mesurées à l'impression sans mise en oeuvre de l'invention objet de la présente demande de brevet sont :
- valeur cible : 50%
- valeur cliché CMY : 30%
- valeur imprimé cyan : 48%
- valeur imprimée Magenta : 49%
- valeur imprimée Yellow : 37%

Il y a donc une dérive importante qui peut être corrigée en amont de la chaîne de fabrication par mise en oeuvre de l'invention objet de la présente demande de brevet. Les valeurs obtenues correspondent aux valeurs ciblées, sans aucune dérive notable.

## Revendications

1. Procédé pour la confection d'un jeu de clichés directement utilisables sur une presse flexographie intégrant des valeurs de trame ajustées de manière à imprimer une épreuve correspondant à l'identique au Bon à Tirer (BAT), ledit procédé prenant en compte les aspects de linéarisation des plaques polymères et des engraissement machine en amont de la gestion du profil colorimétrique, ledit procédé étant **caractérisé en ce qu'**il comprend les étapes suivantes :
a) Réaliser un jeu de clichés linéarisés afin de déterminer les valeurs d'engraissement de la presse flexographie sur chaque groupe imprimant et ce sur chaque support utilisé, lesdits clichés linéarisés consistant en des clichés pour lesquels les dérives des valeurs de trame sont corrigées en fonction a) de la sensibilité de la matière polymère et b) de la fréquence de trame, de manière à ce que les valeurs de trame ciblées à l'impression soient identiques aux valeurs de trame sur le cliché ;
b) Effectuer une impression avec chacun des clichés obtenus à l'étape a) ;
c) Déterminer la densité d'encre qui devient alors la densité standard de la presse sur chaque support ;
d) Déterminer, pour chaque type de support utilisable avec ladite presse donnée, une DGC par groupe imprimant, en tenant compte de la densité d'encre standard ;
e) Confectionner un jeu de clichés dont chaque cliché est dégraissé selon les DGC obtenues à l'étape d) de manière à ce que chaque cliché présente, pour chaque groupe imprimant, des valeurs de trame ajustées et dédiés au support référencé aux étapes c).

2. Procédé selon la revendication 1, **caractérisé en ce que** la densité d'encre standard est comprises entre 0,70 et 2,80.

3. Utilisation du procédé selon l'une des revendications 1 ou 2 pour l'impression d'épreuves correspondant au Bon à Tirer d'un client.

4. Procédé d'impression sur une presse flexographie intégrant des valeurs de trame ajustées de manière à imprimer une épreuve correspondant à l'identique au Bon à tirer du client, ledit procédé étant **caractérisé en ce qu'**il comprend les étapes suivantes :
i) Confectionner un jeu de clichés par mise en oeuvre du procédé selon l'une quelconque des revendications 1 à 2 ;
ii) Effectuer une impression avec lesdits clichés obtenu à l'étape i) sur chacun des supports utilisés ;
iii) Déterminer le profil colorimétrique de ladite presse sur chacun des supports utilisés à partir des résultats d'impression de l'étape ii) ;
iv) A partir du profil colorimétrique obtenu à l'étape iii), simuler à l'identique à l'écran, l'impression de la presse flexographie selon l'ensemble des paramètres de ladite presse flexographie et selon les différents supports ;
v) Réaliser un BAT simulant parfaitement l'impression qui sera obtenue sur la presse flexographie.

5. Procédé selon la revendication 4, **caractérisé en ce que** le profil colorimétrique déterminé à l'étape iii) est déterminé en quadrichromie.

6. Procédé selon l'une quelconque des revendications 1, 2, 4 et 5, **caractérisé en ce que** lesdits supports sont choisis parmi le groupe consistant en du papier, du carton plate, du carton compact, du carton ondulé, une feuille d'aluminium, un film plastique, un film biodégradable.

## Patentansprüche

1. Verfahren zur Herstellung eines Druckplattensatzes, der direkt auf einer Flexodruckpresse verwendbar ist, die Rasterwerte integriert, welche derart angepasst sind, dass sie eine Druckprobe drucken, welche auf identische Weise dem druckreifen Korrekturbogen (BAT) entspricht, wobei das Verfahren Linearisierungsaspekte der Polymerplatten und der der Verwaltung des kolorimetrischen Profils vorgeschalteten Maschinenfettung entspricht, wobei das genannte Verfahren **dadurch gekennzeichnet ist, dass** es die folgenden Stufen umfasst:
a) Realisierung eines Satzes linearisierter Druckplatten, um die Fettungswerte der Flexodruckpresse auf jeder Druckgruppe zu bestimmen, und zwar auf jedem verwendeten Träger, wobei die genannten linearisierten Druckplatten aus Druckplatten bestehen, für die die Abweichungen der Rasterwerte in Abhängigkeit a) von der Sensibilität des Polymermaterials und b) der Rasterfrequenz derart korrigiert werden, dass die beim Drucken angestrebten Rasterwerte mit den Rasterwerten auf der Druckplatte identisch sind;
b) Durchführung eines Drucks mit jeder der in der Stufe a) erhaltenen Druckplatte;
c) Bestimmung der Dichte der Druckfarbe, die dann die Standarddichte der Presse auf jedem Träger wird;
d) Bestimmung einer DGC pro Druckgruppe für jeden mit der genannten bestimmten Presse verwendbaren Trägertyp unter Berücksichtigung der standardmäßigen Dichte der Druckfarbe;
e) Herstellung eines Druckplattensatzes, bei dem jede Druckplatte gemäß den in der Stufe d) erhaltenen DGC derart entfettet wird, dass jede Druckplatte für jede Druckgruppe an in den Stufen c) genannten Träger angepasste und dafür dedizierte Rasterwerte aufweist.

2. Verfahren gemäß Anspruch 1, **dadurch gekennzeichnet, dass** die standardmäßige Dichte der Druckfarbe zwischen 0,70 und 2,80 inbegriffen ist.

3. Verwendung des Verfahrens gemäß Anspruch 1 oder 2 für den Druck von Druckproben, die dem druckreifen Korrekturbogen eines Kunden entsprechen.

4. Druckverfahren auf einer Flexodruckpresse, die Rasterwerte integriert, die derart angepasst sind, dass eine Druckprobe gedruckt wird, welche dem druckreifen Korrekturbogen des Kunden auf identische Weise entspricht, wobei das genannte Verfahren **dadurch gekennzeichnet ist, dass** es die folgenden Stufen umfasst:
i) Herstellung eines Druckplattensatzes durch die Umsetzung des Verfahrens gemäß Anspruch 1 bis 2;
ii) Durchführung eines Drucks mit den genannten Druckplatten, die in der Stufe i) erhalten wurden, auf jedem der verwendeten Träger;
iii) Bestimmung des kolorimetrischen Profils der genannten Presse auf jedem der verwendeten Träger ausgehend von den Druckergebnissen der Stufe ii);
iv) Ausgehend von dem in der Stufe iii) erhaltenen kolorimetrischen Profil Simulation des Drucks der Flexodruckpresse auf identische Weise am Bildschirm gemäß allen Parametern der genannten Flexodruckpresse und gemäß den unterschiedlichen Trägern;
v) Realisierung eines BAT bei perfekter Simulation des Drucks, der auf der Flexodruckpresse erhalten wird.

5. Verfahren gemäß Anspruch 4, **dadurch gekennzeichnet, dass** das in der Stufe iii) bestimmte kolorimetrische Profil im Vierfarbendruck bestimmt wird.

6. Verfahren gemäß Anspruch 1, 2, 4 und 5, **dadurch gekennzeichnet, dass** die genannten Träger aus der Gruppe ausgewählt sind, bestehend aus Papier, flacher Pappe, kompakter Pappe, Wellpappe, einer Aluminiumfolie, einer Plastikfolie, einer biologisch abbaubaren Folie.

## Claims

1. Method for producing a set of plates that can be used directly on a flexographic printing press having built-in screen values that are adjusted so as to produce a proof corresponding exactly to the Ready for Press proof, said method taking into account the aspects of linearisation of the polymer plates and the machine dot gain upstream of the management of the colour profile, said method being **characterised in that** it comprises the following steps:
a) producing a set of linearised plates in order to determine the dot gain values of the flexographic printing press at each print unit and on each substrate used, said linearised plates consisting of plates for which the screen value deviations are corrected as a function of a) the sensitivity of the polymer material and b) the screen frequency, so that the target screen values in the print operation are identical to the screen values on the plate;
b) performing a print operation with each of the plates obtained in step a);
c) determining the ink density which then becomes the standard density of the press on each substrate;
d) determining a DGC per print unit, for each type of substrate that may be used with the press in question, taking account of the standard ink density;
e) producing a set of plates in which each plate is free from dot gain according to the DGCs obtained in step d), so that, for each print unit, each plate has dedicated screen values appropriate to the substrate mentioned in step c).

2. Method according to claim 1, **characterised in that** the standard ink density is between 0.70 and 2.80.

3. Use of the method according to one of claims 1 or 2 for printing proofs corresponding to a client's Ready for Press proof.

4. Method of printing on a flexographic printing press having built-in screen values that are adjusted so as to print a proof corresponding exactly to the client's Ready for Press proof, said method being **characterised in that** it comprises the following steps:
i) producing a set of plates by carrying out the method according to either of claims 1 and 2;
ii) performing a print operation with said plates obtained in step i) on each of the substrates used;
iii) determining the colour profile of said press on each of the substrates used, on the basis of the print results of step ii);
iv) starting from the colour profile obtained in step iii), displaying an on-screen identical image of the printing of the flexographic printing press according to all the parameters of said flexographic printing press and according to the different substrates;
v) producing a Ready for Press proof which accurately simulates the print which will be obtained on the flexographic printing press.

5. Method according to claim 4, **characterised in that** the colour profile determined in step iii) is determined in four-colour printing.

6. Method according to one of claims 1, 2, 4 and 5, **characterised in that** the said substrates are selected from among the group comprising paper, flat cardboard, compact cardboard, corrugated cardboard, aluminium foil, plastic film and biodegradable film.
